# EUROPÄISCHE PATENTANMELDUNG

(11) **EP 2 767 359 A1**
(43) Veröffentlichungstag der Anmeldung: **20.08.2014**
(21) Anmeldenummer: 13000809.7
(22) Anmeldetag: 18.02.2013
(51) Int. Cl.: B23F 23/04, B23F 17/00, B23Q 7/02, B23Q 39/04

(54) **Verzahnmaschine**

(71) Anmelder: LIEBHERR-VERZAHNTECHNIK GmbH, 87437 Kempten (DE)
(72) Erfinder: Plessing, Matthias, 87437 Kempten (DE); Göbel, Felix, 87439 Kempten (DE)
(74) Vertreter: Laufhütte, Dieter

(57) **Zusammenfassung**

Die Erfindung betrifft eine Verzahnmaschine, insbesondere Verzahnfräs- oder Verzahnstoßmaschine, mit mindestens zwei an einem Spindelträger angeordneten Werkstückspindeln zur Aufnahme von Werkstücken, wobei der Spindelträger um eine Hauptschwenkachse verschenkbar ist und die Werkstückspindeln jeweils einen Antrieb zum Drehen der Werkstücke um eine Drehachse aufweisen, und mit einer Hauptbearbeitungsstation zum Bearbeiten von in den Werkstückspindeln aufgenommenen Werkstücken, wobei die beiden Werkstückspindeln durch Verschenken des Spindelträgers um die Hauptschwenkachse abwechselnd in den Arbeitsbereich der Hauptbearbeitungsstation verfahrbar sind, wobei die Drehachsen der beiden Werkstückspindeln jeweils in einen Winkel α ≠ 0 zur Hauptschwenkachse am Spindelträger angeordnet sind.

## Beschreibung

Die vorliegende Erfindung betrifft eine Verzahnmaschine, insbesondere eine Verzahnfräs- oder Verzahnstoßmaschine mit mindestens zwei Werkstückspindeln.

Aus der DE 10 2006 044 738 B3 eine Verzahnfräsmaschine bekannt, welche einen um eine Hauptachse verschwenkbaren Drehhalter mit zwei Werkstückspindeln aufweist, deren Spindelachsen parallel zur Hauptachse verlaufen. Dabei ist der Drehhalter in eine erste Verschwenkposition verschwenkbar, in der die erste Werkstückspindel in einer Transferposition und die zweite Werkstückspindel in einer Bearbeitungsposition ist, und in eine zweite Verschwenkposition, in der die erste Werkstückspindel in der Bearbeitungsposition und die zweite Werkstückspindel in der Transferposition ist. Nachteilig an diesem Aufbau ist der schlecht zugängliche Arbeitsraum sowie die Tatsache, dass die beiden Werkstückspindeln nahe beieinander liegen, so dass sich die Bearbeitungsstellen gegenseitig beeinflussen.

Aufgabe der vorliegenden Erfindung ist es daher, eine gegenüber dem Stand der Technik verbesserte Verzahnmaschine zur Verfügung zu stellen.

Diese Aufgabe wird erfindungsgemäß durch eine Verzahnmaschine gemäß Anspruch 1 gelöst.

Die erfindungsgemäße Verzahnmaschine weist mindestens zwei an einem Spindelträger angeordnete Werkstückspindeln zur Aufnahme von Werkstücken auf, wobei der Spindelträger um eine Hauptschwenkachse verschwenkbar ist und die Werkstückspindeln jeweils einen Antrieb zum Drehen der Werkstücke um eine Drehachse aufweisen. Weiterhin ist eine Hauptbearbeitungsstation zum Bearbeiten von in den Werkstückspindeln aufgenommenen Werkstücken vorgesehen. Der Aufbau der Verzahnmaschine erlaubt es dabei, die beiden Werkstückspindeln durch Verschwenken des Spindelträgers um die Hauptschwenkachse abwechselnd in den Arbeitsbereich der Hauptbearbeitungsstation zu verfahren. Erfindungsgemäß ist dabei vorgesehen, dass die Drehachsen der beiden Werkstückspindeln jeweils in einem Winkel α # 0 zur Hauptschwenkachse am Spindelträger angeordnet sind.

Als Winkel α zwischen der Drehachse einer Werkstückspindel und der Hauptschwenkachse wird dabei der kleinere der (zwei) denkbaren Winkel zwischen den die Ausrichtung dieser Achsen definierenden Richtungsvektoren betrachtet. Der Winkel α beträgt damit maximal 90°.

Dadurch, dass die Drehachsen der Werkstückspindeln anders als im Stand der Technik erfindungsgemäß nicht mehr parallel zur Hauptschwenkachse des Spindelträgers angeordnet sind, sondern einen gewissen Winkel α zu dieser aufweisen, ist der Arbeitsraum leichter zugänglich. Weiterhin beeinflusst eine Bearbeitung des einen Werkstücks an der einen Werkstückspindel die Bearbeitung bzw. das Handling eines Werkstücks an der anderen Werkstückspindel in geringerem Maße. Weiterhin kann der Bearbeitungskopf der Hauptbearbeitungsstation näher an der Drehachse des Spindelträgers angeordnet werden, wodurch höhere Steifigkeiten und bessere Thermostabilitäten erreicht werden.

Vorteilhafterweise weisen die Drehachsen der beiden Werkstückspindeln erfindungsgemäß den gleichen Winkel zur Hauptschwenkachse auf. Ebenso kann vorgesehen sein, dass die beiden Werkstückspindeln den gleichen Abstand zur Hauptschwenkachse aufweisen.

Durch die oben beschriebenen Ausgestaltungen kann erreicht werden, dass die beiden Werkstückspindeln durch ein entsprechendes Verschwenken des Spindelträgers die gleiche Ausrichtung bzw. den gleichen Abstand relativ zur Hauptbearbeitungsstation aufweisen können. Besonders bevorzugt sind die beiden Werkstückspindeln dabei so am Spindelträger angeordnet, dass sie durch ein entsprechendes Verschwenken des Spindelträgers abwechselnd in eine identische Position und Ausrichtung relativ zur Hauptbearbeitungsstation verfahrbar sind.

Vorteilhafterweise sind die Drehachsen der beiden Werkstückspindeln am Spindelträger erfindungsgemäß jeweils mit einem Winkel α > 30° zur Hauptschwenkachse angeordnet. Hierdurch wird, wie bereits oben beschrieben, u. a. der Arbeitsraum leichter zugänglich. Weiterhin vorteilhafterweise beträgt der Winkel α mehr als 60°.

In einer besonders bevorzugten Ausführungsform sind die beiden Werkstückspindeln in einer Ebene angeordnet, welche senkrecht auf der Hauptschwenkachse steht. In diesem Fall beträgt der Winkel α also 90° zur Hauptschwenkachse. Diese Anordnung erlaubt eine besonders gute Zugänglichkeit des Arbeitsraumes, eine besonders gute Abschirmung der Bearbeitungsstationen gegeneinander, sowie größere Steifigkeiten und bessere Thermostabilitäten.

In einer bevorzugten Ausführungsform der vorliegenden Erfindung sind die Drehachsen der beiden Werkstückspindeln parallel zueinander angeordnet. Dies ist insbesondere dann von Vorteil, wenn zwei auf gegenüberliegenden Seiten der Hauptschwenkachse angeordnete Werkstückspindeln eingesetzt werden. Vorteilhafterweise weisen die beiden Drehachsen dabei einen gewissen Abstand zueinander auf. Hierdurch ergibt sich mehr Bauraum für die Antriebe der Drehachsen, da diese versetzt zueinander am Spindelträger angeordnet werden können. Alternativ könnten die Drehachsen jedoch auch radial verlaufen.

Die erfindungsgemäße Verzahnmaschine weist vorteilhafterweise mindestens eine Nebenstation zum Be- und Entladen der Werkstückspindeln und/oder zum Nebenbearbeiten der in den Werkstückspindeln aufgenommenen Werkstücke auf. Dabei kann die Nebenstation nur zum Be- und Entladen eingesetzt werden, oder nur zum Nebenbearbeiten. Weiterhin kann auch eine erste Nebenstation zum Be- und Entladen und eine zweite Nebenstation zum Nebenbearbeiten eingesetzt werden. Besonders bevorzugt wird jedoch eine Nebenstation eingesetzt, an welcher sowohl ein Be- und Entladen der Werkstückspindeln als auch ein Nebenbearbeiten eines in einer Werkstückspindel aufgenommenen Werkstücks möglich ist.

An der Nebenstation kann dabei beispielsweise ein Anfasen und/oder Entgraten erfolgen, insbesondere ein Anfasfräsentgraten oder ein ChamferCut-Prozess oder ein Drückentgrat-Prozess. Alternativ kann die Bearbeitung an der Nebenstation auch aus einem Bohren, Fräsen, Polieren oder ähnlichem bestehen. Ebenso kann die Nebenstation als Vermessstation und/oder als Einrichtungsstation und/oder als Reinigungsstation und/oder als Kontrollstation ausgeführt sein.

Weiterhin kann die erfindungsgemäße Verzahnmaschine eine Steuerung mit einer Funktion aufweisen, durch deren Aktivieren der Spindelträger in eine erste und vorteilhafterweise in eine zweite Zwischenposition gefahren werden kann, in welcher sich zumindest eine der Werkstückspindeln nicht in einer Haupt- oder Nebenbearbeitungsposition befindet. Insbesondere kann dabei in der oder den Zwischenpositionen ein Umrüsten der Werkstückspindel erfolgen.

Vorteilhafterweise können die Werkstückspindeln so durch Betätigen der Funktion in eine Rüstposition verfahren werden, wo ein Umrüsten der Werkstückspindel erfolgt.

Bevorzugt kann die Zwischenposition dabei so gewählt werden, dass sich keine der Werkstückspindeln in einer Haupt- oder Nebenbearbeitungsposition befindet. Bei zwei Werkstückspindeln kann die Zwischenposition dabei bspw. um 90° gegenüber einer Bearbeitungsposition versetzt sein.

In einer Ausführung der vorliegenden Erfindung weist die Hauptbearbeitungsstation einen Bearbeitungskopf auf, welcher über eine Linearachse X auf das Werkstück zugestellt werden kann. Weiterhin kann eine Linearachse Z vorgesehen sein, über welche der Bearbeitungskopf entlang der Zahnbreite des Werkstücks verfahrbar ist. Ebenso kann eine Schwenkachse A vorgesehen sein, über welche der Bearbeitungskopf relativ zum Werkstück verschwenkt werden kann. Der Bearbeitungskopf weist dabei vorteilhafterweise eine Werkzeugspindel auf, in welcher ein Werkzeug eingespannt und über einen Antrieb der Werkzeugspindel um eine Drehachse B gedreht werden kann. Dabei kann weiterhin eine Linear-Achse V vorgesehen sein, über welche die Werkzeugspindel parallel zur Drehachse B vershiftet werden kann.

Durch die Anordnung der Drehachsen der Werkstückspindel in einem Winkel α zur Hauptschwenkachse des Spindelträgers wird eine entsprechend modifizierte Anordnung der Bewegungsachsen des Bearbeitungskopfes möglich.

Insbesondere kann dabei die Linearachse X einen Winkel von β # 90° zur Hauptschwenkachse des Spindelträgers aufweisen, insbesondere einen Winkel < 60°, weiterhin einen Winkel < 30°. Besonders bevorzugt kann die Linearachse X dabei parallel zur Hauptschwenkachse verlaufen. Insbesondere kann der Winkel β der Linearachse X zur Hauptschwenkachse dabei 90° - α betragen.

Weiterhin kann die Linearachse Z einen Winkel γ # 0 zur Hauptschwenkachse aufweisen, vorteilhafterweise einen Winkel γ > 30°, weiterhin vorteilhafterweise einen Winkel γ > 60°. Besonders bevorzugt kann die Linearachse Z dabei in einer Ebene angeordnet sein, welche senkrecht zur Hauptschwenkachse steht. Insbesondere kann dabei der Winkel γ dem Winkel α entsprechen.

Weiterhin kann die Schwenkachse A einen Winkel ϕ ≠90° zur Hauptschwenkachse aufweisen. Vorteilhafterweise ist der Winkel ϕ dabei kleiner 60 °, weiterhin vorteilhafterweise kleiner 30°. Besonders bevorzugt kann die Schwenkachse A dabei parallel zur Hauptschwenkachse angeordnet sein. Weiterhin kann der Winkel ϕ dem Winkel α entsprechen.

Weiterhin kann auch ein an der Nebenstation vorgesehenes Bearbeitungswerkzeug in einer Ebene an das Werkstück heranfahrbar sein, welche einen Winkel ξ # 90° zur Hauptschwenkachse aufweist. Vorteilhafterweise kann der Winkel ξ dabei kleiner als 60° sein, weiterhin kleiner als 30°. Besonders bevorzugt ist das Bearbeitungswerkzeug der Nebenstation dabei in einer Ebene an das Werkstück heranfahrbar, welche parallel zur Hauptschwenkachse verläuft. Auch hier kann der Winkel ξ des Bearbeitungswerkzeugs zur Hauptschwenkachse dem Winkel α entsprechen.

Ein entsprechender Aufbau der Verzahnmaschine, welcher durch die erfindungsgemäße Anordnung der Werkstückspindeln am Spindelträger möglich wird, ist durch das weitere Auseinanderliegen der Bearbeitungsstellen deutlich handhabungsfreundlicher. Insbesondere ist der Arbeitsraum leichter zugänglich. Weiterhin ist ein Anordnen der Werkstücke von einem Band an den Werkstückspindeln einfacher. Zudem erlaubt der Aufbau ein gerades Maschinenbett, bei welchem der Bearbeitungskopf und der Spindelträger nebeneinander verlaufen. Hierdurch können größere Steifigkeiten und bessere Thermostabilitäten erreicht werden.

Vorzugsweise weist die erfindungsgemäße Verzahnmaschine dabei einen Gegenhalter auf. Ein solcher Gegenhalter erlaubt ein präziseres Bearbeiten eines an einer Werkstückspindel angeordneten Werkstücks bzw. ermöglicht erst eine wirtschaftliche Bearbeitung wellenförmiger Werkstücke.

Vorteilhafterweise ist der Gegenhalter dabei erfindungsgemäß nicht an dem Spindelträger angeordnet, sondern an einem stationären Maschinenelement. Hierdurch werden hohe Steifigkeiten erreicht.

Vorteilhafterweise ist der Gegenhalter dabei über eine Linearachse an dem stationären Maschinenelement angeordnet, und kann so an ein an einer Werkstückspindel aufgenommenes Werkstück herangefahren werden. Insbesondere kann der Gegenhalter dabei so an der Verzahnmaschine angeordnet werden, dass er mit einer Werkstückspindel zusammenwirkt, wenn sich diese in der Hauptbearbeitungsposition befindet.

Insbesondere kann die Linearachse des Gegenhalters dabei eine horizontale Bewegung des Gegenhalters zur Werkstückspindel hin erlauben. Vorteilhafterweise verläuft die Drehachse der Werkstückspindel dabei in der Hauptbearbeitungsposition ebenfalls horizontal.

Erfindungsgemäß kann der Gegenhalter damit am stabilen Maschinenbett angebunden werden, was ein klares Maschinenkonzept mit hoher Steifigkeit zulässt.

Weiterhin wird durch die vorliegende Erfindung eine leichtere Bedienbarkeit erreicht. Weiterhin können auch komplizierte Werkstücke präzise bearbeitet werden. Insbesondere können durch die stabilere Anordnung engere Toleranzen für die Genauigkeit eingehalten werden. Insbesondere kann dabei im Hinblick auf die Stabilität auf Zuganker verzichtet werden.

In einer Ausführungsform der vorliegenden Erfindung sind die beiden Werkstückspindeln so am Spindelträger angeordnet, dass sich in einer ersten Verschwenkstellung des Spindelträgers eine erste Werkstückspindel im Arbeitsbereich der Hauptbearbeitungsstation und eine zweite Werkstückspindel im Arbeitsbereich der Nebenstation befinden. Vorteilhafterweise kann durch ein Verschwenken des Spindelträgers in eine zweite Verschwenkstellung die erste Werkstückspindel in den Arbeitsbereich der Nebenstation verfahrbar sein. Alternativ oder zusätzlich kann die zweite Werkstückspindel durch ein Verschwenken des Spindelträgers in die zweite oder eine dritte Verschwenkstellung in den Arbeitsbereich der Hauptbearbeitungsstation verfahrbar sein.

In einer bevorzugten Ausführungsform befinden sich die Hauptbearbeitungsstation und die Nebenbearbeitungsstation bezüglich der Hauptschwenkachse auf gegenüberliegenden Seiten des Spindelträgers. Hierdurch sind die beiden Bearbeitungsstellen durch den Spindelträger voneinander getrennt, und beeinflussen sich nicht gegenseitig. Hierdurch kann auf eine zusätzliche Abschirmung zwischen den beiden Bearbeitungsstellen verzichtet werden.

Die erfindungsgemäße Ausgestaltung des Spindelträgers erlaubt sowohl eine horizontale, als auch eine vertikale Anordnung der Hauptschwenkachse. Besonders bevorzugt ist dabei eine horizontale Anordnung der Hauptschwenkachse.

In einer bevorzugten Ausführungsform der vorliegenden Erfindung sind Hauptbearbeitungsstation und Spindelträger so ausgeführt, dass die Drehachse der Werkstückspindel, welche sich im Arbeitsbereich der Hauptbearbeitungsstation befindet, im Wesentlichen horizontal ausgerichtet ist. Hierdurch können Späne, welche bei der Bearbeitung entstehen, einfach nach unten fallen.

Weiterhin vorteilhafterweise ist auch die Drehachse der Werkstückspindel, welche sich im Arbeitsbereich der Nebenbearbeitungsstation befindet, horizontal ausgerichtet. Auch hierdurch können Späne einfach nach unten fallen.

Dabei kann ein Späneförderer vorgesehen sein, welcher senkrecht zur Hauptschwenkachse unter den beiden Bearbeitungsstellen hindurch verläuft.

Insbesondere bei einer horizontalen Anordnung der Hauptschwenkachse kann dabei ein gemeinsamer Späneförderer für die Hauptbearbeitungsstation und die Nebenstation vorgesehen sein, welcher unterhalb des Spindelträgers angeordnet ist.

Weiterhin kann vorgesehen sein, dass die Transportrichtung des Späneförderers in einer Ebene liegt, welche senkrecht auf der Hauptschwenkachse des Spindelträgers steht. Insbesondere kann der Späneförderer dabei unterhalb der Spindel angeordnet sein.

In einer weiteren Ausführungsform der erfindungsgemäßen Verzahnmaschine kann diese insgesamt mindestens drei an dem Spindelträger angeordnete Werkstückspindeln zur Aufnahme von Werkstücken umfassen, wobei die Werkstückspindeln jeweils ein Antrieb zum Drehen der Werkstücke um eine Drehachse aufweisen. Besonders bevorzugt sind dabei insgesamt mindestens vier an dem Spindelträger angeordnete Werkstückspindeln vorgesehen. In einer besonders bevorzugten Ausführungsform sind dabei genau vier Werkstückspindeln vorgesehen.

Für die Anordnung der Werkstückspindeln und deren Drehachsen relativ zur Hauptschwenkachse des Spindelträgers sowie am Spindelträger gelten die gleichen Bedingungen, wie sie oben im Hinblick auf die mindestens zwei Werkstückspindeln näher dargelegt wurden. Insbesondere ist dabei bevorzugt, dass die Drehachsen sämtlicher Werkstückspindeln jeweils in einem Winkel α # 0 zur Hauptschwenkachse am Spindelträger angeordnet sind. Bevorzugt weisen dabei sämtliche Werkstückspindeln den gleichen Winkel zur Hauptschwenkachse und/oder den gleichen Abstand zur Hauptschwenkachse auf. Weiterhin bevorzugt können dabei sämtliche Werkstückspindeln so am Spindelträger angeordnet sein, dass sie durch ein entsprechendes Verschwenken des Spindelträgers abwechselnd in eine identische Position und Ausrichtung relativ zur Hauptbearbeitungsstation verfahrbar sind.

Vorteilhafterweise sind die mindestens drei Werkstückspindeln dabei mit jeweils gleichen Abständen bzw. gleichen Winkelabständen zueinander am Spindelträger angeordnet. Sind vier Werkstückspindeln vorgesehen, so sind diese vorteilhafterweise jeweils um 90° versetzt am Spindelträger angeordnet.

Die Verwendung von mehr als zwei Werkstückspindeln erlaubt es zum einen, das Be- und Entladen und die Nebenbearbeitung an unterschiedlichen Stationen durchzuführen. Hierdurch können die Taktzeiten erhöht werden.

Alternativ oder zusätzlich macht es eine solche Ausführung möglich, zusätzlich weitere Bearbeitungs- oder Rüstschritte vorzunehmen und/oder weitere Nebenstationen vorzusehen.

Alternativ oder zusätzlich zur Verwendung von mehr als zwei Spindelträgern kann die erfindungsgemäße Verzahnmaschine weiterhin eine Steuerung aufweisen, welche den Spindelträger zwischen zwei Bearbeitungsschritten um weniger als 180° zu einer neuen Spindelträgerposition verschwenkt. Besonders bevorzugt wird der Spindelträger dabei von einer Spindelträgerposition zur nächsten Spindelträgerposition um 90° verschwenkt.

Sind dabei mehr als zwei Werkstückspindeln am Spindelträger angeordnet, so sorgt eine solche Steuerung dafür, dass sämtliche Werkstückspindeln auch tatsächlich zum Bearbeiten von Werkstücken eingesetzt werden können.

Sind dagegen nur zwei Werkstückspindeln vorgesehen, so kann durch eine solche Steuerung entweder eine Trennung von Nebenbearbeitung und Be- und Entladen, und/oder eine weitere Nebenbearbeitung und/oder, wie bereits oben beschrieben, ein Umrüsten der Werkstückspindeln durchgeführt werden.

Bevorzugt weist die erfindungsgemäße Verzahnmaschine mindestens eine zweite Nebenstation zum Be- und Entladen der Werkstückspindeln und/oder zum Nebenbearbeiten der in den Werkstückspindeln aufgenommenen Werkstücke auf.

In einer ersten Ausführungsvariante kann so die erste Nebenstation zum Be- und Entladen der Werkstückspindeln und die zweite Nebenstation zum Nebenbearbeiten der Werkstückspindeln eingesetzt werden, oder umgekehrt. In einer weiteren Variante verbleiben Be- und Entladen sowie das Nebenbearbeiten dagegen bei der ersten Nebenstation, während an der zweiten Nebenstation eine zusätzliche, weitere Nebenbearbeitung durchgeführt wird.

So kann die zweite Nebenstation beispielsweise als Vermessstation und/oder als Einrichtungsstation und/oder als Reinigungsstation und/oder als Kontrollstation ausgeführt sein.

Vorteilhafterweise sind die mindestens zwei Werkstückspindeln erfindungsgemäß so am Spindelträger angeordnet, dass sich in einer dritten Verschwenkstellung des Spindelträgers eine erste Werkstückspindel im Arbeitsbereich der zweiten Nebenstation befindet. Sind dabei nur zwei Werkstückspindeln vorgesehen, so befindet sich die zweite Werkstückspindel in dieser dritten Verschwenkstellung bevorzugt weder an der Hauptbearbeitungsstation noch an der ersten Nebenbearbeitungsstation.

Sind dagegen vier Werkstückspindeln vorgesehen, so befindet sich vorteilhafterweise in der dritten Verschwenkstellung des Spindelträgers eine zweite Werkstückspindel in dem Arbeitsbereich der ersten Nebenstation und eine erste Werkstückspindel in dem Arbeitsbereich der Hauptbearbeitungsstation.

Die Verzahnmaschine gemäß der vorliegenden Erfindung kann weiterhin eine Transportstrecke zum Zu- und/oder Abtransport der Werkstücke zur Be- und/oder Entladungsstation aufweisen. Bevorzugt ist dabei eine Handhabungsvorrichtung vorgesehen, welche die Werkstücke von der Transportstrecke abnimmt und an einer Werkstückspindel anordnet, welche sich in der Nebenposition an der Be- und Entladungsstation befindet.

Erfindungsgemäß kann die Transportstrecke dabei so ausgerichtet sein, dass ihre Haupt-Transportrichtung parallel zur Haupt-Schwenkachse des Spindelträgers verläuft. Die Transportstrecke kann damit erfindungsgemäß neben der Verzahnmaschine verlaufen.

Weiterhin kann vorgesehen sein, dass die Handhabungsvorrichtung die Werkstücke um 90° dreht, wenn sie sie von der Transportstrecke abnimmt und an der Werkstückspindel anordnet. Hierdurch ergibt sich ein besonders einfacher Be- und Entladevorgang, welcher durch die erfindungsgemäße Ausrichtung der Drehachsen der Werkstückspindeln ermöglicht wird.

Besonders bevorzugt ist die Drehachse derjenigen Werkstückspindel, welche sich im Arbeitsbereich der Be- und/oder Entladungsstation befindet, horizontal ausgerichtet. Dies ermöglicht ein besonders einfaches Be- und Entladen der erfindungsgemäßen Werkzeugspindeln. Vorteilhafterweise verläuft die Haupttransportrichtung der Transportstrecke dabei in einer Ebene, welche senkrecht auf der Drehachse der Werkstückspindel steht.

Besonders bevorzugt wird die oben näher beschriebene Transportstrecke dabei dann eingesetzt, wenn das Be- und Entladen an einer Nebenstation durchgeführt ist, welche im Hinblick auf den Spindelträger gegenüber der Hauptbearbeitungsstation angeordnet ist, so dass eine Werkstückspindel durch ein Verschwenken des Spindelträgers um 180° von der Hauptbearbeitungsstation zur Nebenbearbeitungsstation verschwenkt werden kann.

Alternativ ist ein Be- und Entladen jedoch auch an einer Be- und Entladestation denkbar, welche mit einem geringeren Verschwenkwinkel als 180° von der Hauptbearbeitungsstation aus erreichbar ist. Insbesondere kann diese Be- und Entladestation dabei um 90° gegenüber der Hauptbearbeitungsstation versetzt angeordnet sein. In diesem Fall sind bevorzugt zwei separate Nebenstationen vorgesehen, wobei an der anderen Nebenstation eine Nebenbearbeitung erfolgt.

Der erfindungsgemäße Maschinenaufbau ermöglicht eine Vielzahl von Verfahren, bei welchen gleichzeitig ein an der ersten Werkstückspindel angeordnetes Werkstück an der Hauptbearbeitungsstation bearbeitet wird, und an der Nebenstation entweder die andere Werkstückspindel be- oder entladen wird, und/oder ein an der anderen Werkstückspindel angeordnetes Werkstück nebenbearbeitet wird. Hierdurch können entsprechend Prozesszeiten eingespart werden.

Dabei ist es möglich, während der Bearbeitung eines Werkstückes an der Hauptbearbeitungsstation an der anderen Bearbeitungsstation sowohl einen Nebenprozess, als auch (davor und/oder danach) ein Be- und Entladen vorzunehmen. Dies ist insbesondere dann von Vorteil, wenn die Prozesszeit für die Hauptbearbeitung deutlich länger ist als die Prozesszeit für die Nebenbearbeitung.

Die vorliegende Erfindung umfasst dabei gemäß einer ersten Steuerroutine ein Verfahren zur Herstellung eines verzahnten Werkstücks, insbesondere eines Zahnrads, auf einer Verzahnmaschine, wie sie oben beschrieben wurde, bei welchem eine Werkstückspindel an einer Nebenstation mit einem Werkstück beladen und dieses gegebenenfalls bearbeitet wird, die Werkstückspindel mit dem Werkstück durch Verschwenken des Spindelträgers in den Arbeitsbereich der Hauptbearbeitungsstation verfahren wird, das Werkstück an der Hauptbearbeitungsstation bearbeitet, insbesondere verzahnt wird, die Werkstückspindel mit dem Werkstück durch Verschwenken des Spindelträgers in den Arbeitsbereich einer Nebenstation verfahren wird, wo das Werkstück gegebenenfalls bearbeitet und dann entladen wird. Daraufhin beginnt der Prozess mit dem Beladen der entsprechenden Werkstückspindel erneut. Insbesondere kann es sich bei der Nebenstation, bei welcher das Werkstück beladen, und bei der Nebenstation, an welcher das Werkstück entladen wird, um die gleiche Nebenstation handeln.

Vorteilhafterweise werden dabei zwei Werkstücke jeweils gleichzeitig auf der Maschine bearbeitet, wobei die oben genannten Schritte für die beiden Werkstücke jeweils nacheinander durchgeführt werden. Insbesondere kann ein erstes Werkstück dabei an der Nebenstation be- oder entladen und gegebenenfalls bearbeitet werden, während ein zweites Werkstück an der Hauptbearbeitungsstation hauptbearbeitet wird.

Gemäß einer zweiten Steuerroutine umfasst die vorliegende Erfindung ein Verfahren zur Herstellung eines verzahnten Werkstückes, insbesondere eines Zahnrads, auf einer Verzahnmaschine, wie sie oben beschrieben wurde, bei welchem eine Werkstückspindel an einer Nebenstation mit einem Werkstück beladen wird, die Werkstückspindel mit dem Werkstück durch Verschwenken des Spindelträgers in den Arbeitsbereich der Hauptbearbeitungsstation verfahren wird, das Werkstück an der Hauptbearbeitungsstation bearbeitet, insbesondere vorverzahnt wird, und die Werkstückspindel mit dem Werkstück durch Verschwenken des Spindelträgers wieder in den Arbeitsbereich einer Nebenstation verfahren wird. Dort wird das Werkstück in einem weiteren Schritt bearbeitet, insbesondere angefast und/oder entgratet; danach wird die Werkstückspindel mit dem an der Nebenstation bearbeiteten Werkstück durch Verschwenken des Spindelträgers wieder in den Arbeitsbereich der Hauptbearbeitungsstation verfahren, wo das Werkstück nochmals bearbeitet wird, insbesondere feinverzahnt. Daraufhin wird die Werkstückspindel mit dem von der Hauptbearbeitungsstation bearbeiteten Werkstück durch Verschwenken des Spindelträgers wieder in den Arbeitsbereich einer Nebenstation verfahren, wo das Werkstück entladen wird. Daraufhin beginnt der Prozess mit dem Beladen der entsprechenden Werkstückspindel erneut. Vorteilhafterweise kann es sich dabei bei der Nebenstation, an welcher das Beladen, das Entladen und das Nebenbearbeiten erfolgen, um die gleiche Station handeln.

Vorteilhafterweise werden bei beiden Steuerroutinen erfindungsgemäß jeweils zwei Werkstücke gleichzeitig auf der Maschine bearbeitet, wobei die Werkstücke die oben genannten Schritte nacheinander durchlaufen.

Bei beiden Steuerroutinen kann weiterhin vorgesehen sein, den Spindelträger in eine erste und weiterhin vorteilhafterweise in eine zweite Zwischenposition zu verfahren, in welcher sich zumindest eine der Werkstückspindeln nicht in einer Hauptoder Nebenbearbeitungsposition befindet. Vorteilhafterweise erfolgt der oder den Zwischenpositionen ein Umrüsten der Werkstückspindel. Vorteilhafterweise werden dabei sämtliche Werkstückspindeln nacheinander durch Verschwenken des Spindelträgers in eine Rüstposition verfahren und umgerüstet.

Vorteilhafterweise erfolgend die erfindungsgemäßen Verfahren dabei so, wie dies bereits oben im Hinblick auf die erfindungsgemäßen Verzahnmaschinen näher beschrieben wurde. Insbesondere können die Verfahren dabei unter Verwendung einer erfindungsgemäßen Verzahnmaschine erfolgen.

Erfindungsgemäß erfolgt das Bearbeiten an der Hauptbearbeitungsstation dabei durch Verzahnfräsen oder Verzahnstoßen.

Vorteilhafterweise weist die erfindungsgemäße Verzahnmaschine eine Steuerung auf, welche eines oder beide der oben beschriebenen Verfahren automatisiert durchführt.

Die vorliegende Erfindung wird nun anhand von Zeichnungen sowie eines Ausführungsbeispiels näher beschrieben. Dabei zeigen:
- Figur 1:: ein Ausführungsbeispiel einer erfindungsgemäßen Verzahnmaschine,
- Figur 2:: eine weitere Ansicht der Hauptbearbeitungsstation, der Nebenstation sowie des Spindelträgers gemäß dem in Figur 1 gezeigten Ausführungsbeispiel,
- Figur 3:: das in Figur 1 gezeigte Ausführungsbeispiel, bei welchem ein Späneförderer und eine Transportstrecke für die Werkstücke ergänzt wurden, in einer perspektiven Ansicht,
- Figur 4:: das in Figur 3 gezeigte Ausführungsbeispiel in einer Draufsicht,
- Figur 5:: ein Ausführungsbeispiel, bei welchem sich der Spindelträger in einer Rüstposition befindet, in welcher keine der Werkstückspindeln in der Hauptbearbeitungsposition angeordnet ist, und
- Figur 6:: ein weiteres Ausführungsbeispiel einer erfindungsgemäßen Verzahnmaschine, bei welchem mehr als zwei Werkstückspindeln am Spindelträger angeordnet sind

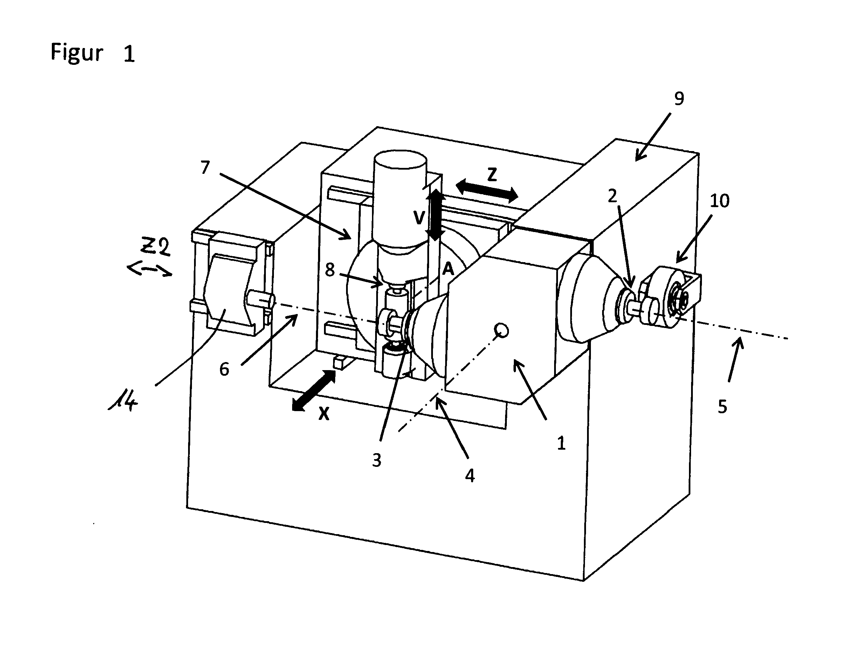

In Figur 1 ist ein Ausführungsbeispiel einer erfindungsgemäßen Verzahnmaschine gezeigt. Dabei ist ein Spindelträger 1 vorgesehen, an welchem eine erste Werkstückspindel 2 und eine zweite Werkstückspindel 3 angeordnet sind.

Im Ausführungsbeispiel sind die Drehachse 5 der Werkstückspindel 2 und die Drehachse 6 der Werkstückspindel 3 in einer Ebene angeordnet, welche senkrecht auf der Hauptschwenkachse 4 der Werkstückspindel 1 angeordnet ist. Im Ausführungsbeispiel sind die Drehachsen 5 und 6 der Werkstückspindeln dabei parallel zueinander angeordnet, und weisen jeweils den gleichen Abstand zur Hauptschwenkachse 4 auf. Durch die zur Hauptschwenkachse 4 versetzte Anordnung der Werkstückspindeln steht für die Antriebe der Werkstückspindeln mehr Bauraum zur Verfügung.

Die erfindungsgemäße Verzahnmaschine weist eine Hauptbearbeitungsstation 7 auf, bei welcher es sich im Ausführungsbeispiel um einen Bearbeitungskopf mit entsprechenden Bewegungsachsen handelt. Der Bearbeitungskopf weist dabei eine Werkzeugaufnahme 8 auf, durch welche ein Werkzeug über einen entsprechenden Antrieb in Rotation versetzt werden kann. Bei dem Werkzeug kann es sich dabei insbesondere um ein Fräswerkzeug handeln. Alternativ wäre jedoch auch der Einsatz eines Schleifwerkzeugs denkbar.

Durch die erfindungsgemäße Anordnung der Werkstückspindeln kann die Hauptbearbeitungsstation 7 direkt neben dem Lagerbock 9, an welchem der Spindelträger 4 schwenkbar gelagert ist, angeordnet werden. Hierdurch ergibt sich eine besonders steife und thermostabile Anordnung.

Der Bearbeitungskopf weist eine Linearbewegungsachse X auf, über welche das Bearbeitungswerkzeug an ein Werkstück, welches in der entsprechenden Werkstückspindel angeordnet ist, herangefahren werden kann. Die Linearachse X verläuft dabei im Ausführungsbeispiel parallel zur Hauptschwenkachse 4. Weiterhin ist eine Linearachse Z vorgesehen, über welche der Bearbeitungskopf entlang der Zahnbreite des Werkstücks verfahren werden kann. Die Linearachse Z ist dabei im Ausführungsbeispiel in einer Ebene angeordnet, welche senkrecht auf der Hauptschwenkachse 4 steht. Insbesondere verläuft die Linearachse Z dabei parallel zur Drehachse 5 bzw. 6 derjenigen Werkstückspindel, welche sich in der Hauptbearbeitungsposition befindet. Weiterhin ist eine Schwenkachse A vorgesehen, über welche der Bearbeitungskopf relativ zum Werkstück verschwenkt werden kann. Die Schwenkachse A verläuft dabei im Ausführungsbeispiel parallel zur Hauptschwenkachse 4 des Spindelträgers. Weiterhin kann eine Linearachse V vorgesehen sein, über welche das Werkzeug in Richtung seiner Rotationsachse vershiftet werden kann.

Weiterhin weist die erfindungsgemäße Verzahnmaschine einen Gegenhalter 14 auf, welcher am Maschinenbett stabil angebunden ist und daher ein Maschinenkonzept mit hoher Steifigkeit erlaubt. Der Gegenhalter 14 kann dabei über eine Linearachse Z2 an ein Werkstück herangefahren werden, welches an der Werkstückspindel angeordnet ist, die sich gerade in der Hauptbearbeitungsposition befindet. Der Gegenhalter sorgt damit während der Hauptbearbeitung für eine höhere Präzision. Für das Verschwenken des Spindelträgers wird der Gegenhalter 14 dagegen wieder zurückgefahren. Der Gegenhalter 14 weist eine Drehachse auf, welche parallel zur Drehachse 6 der Werkstückspindel 3 verläuft, die sich in der Hauptbearbeitungsposition befindet. Vorteilhafterweise verläuft die Linearachse Z2 dabei parallel zur Linearachse Z, mit welcher der Bearbeitungskopf in Zahnbreitenrichtung verschoben werden kann.

Durch das erfindungsgemäße Maschinenkonzept wird eine hohe Steifigkeit erreicht, welche wiederum eine leichtere Bedienbarkeit ermöglicht und zudem engere Toleranzen bei der Bearbeitungsgenauigkeit zulässt. Weiterhin können auch komplizierte Werkstücke präziser bearbeitet werden. Insbesondere kann dabei erfindungsgemäß auf Zuganker für den Gegenhalter verzichtet werden. Vielmehr kann der Gegenhalter an einem Maschinenblock 29 angeordnet werden, welcher dem Maschinenblock 9, an welchem der Spindelhalter angeordnet ist, im Bezug auf den Bearbeitungskopf gegenüberliegt.

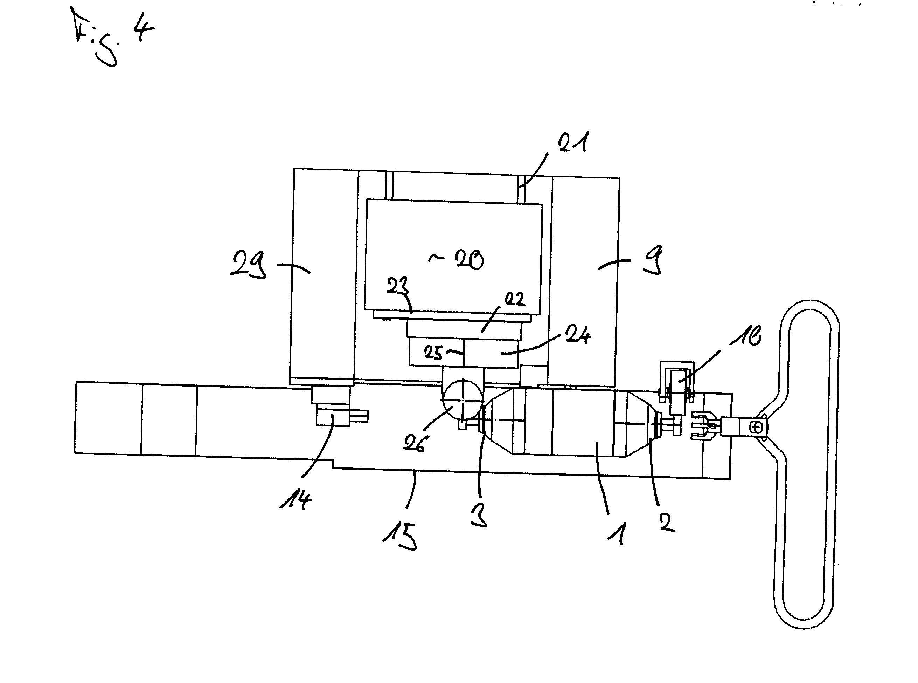

Die Anordnung der Maschinenblöcke ist dabei noch einmal in Figur 4 zu sehen, welche die in Figuren 1 bis 3 gezeigte Verzahnmaschine in einer Draufsicht zeigt. Dabei ist zunächst der Maschinenblock 9 auf der einen Seite der Verzahnmaschine zu sehen, an welchem der Spindelträger 1 schwenkbar angeordnet ist. Auf der gegenüberliegenden Seite ist der Maschinenblock 29 angeordnet, welcher den Gegenhalter 14 trägt. Zwischen diesen beiden Maschinenblöcken 9 und 29 ist die Hautptbearbeitungsstation angeordnet.

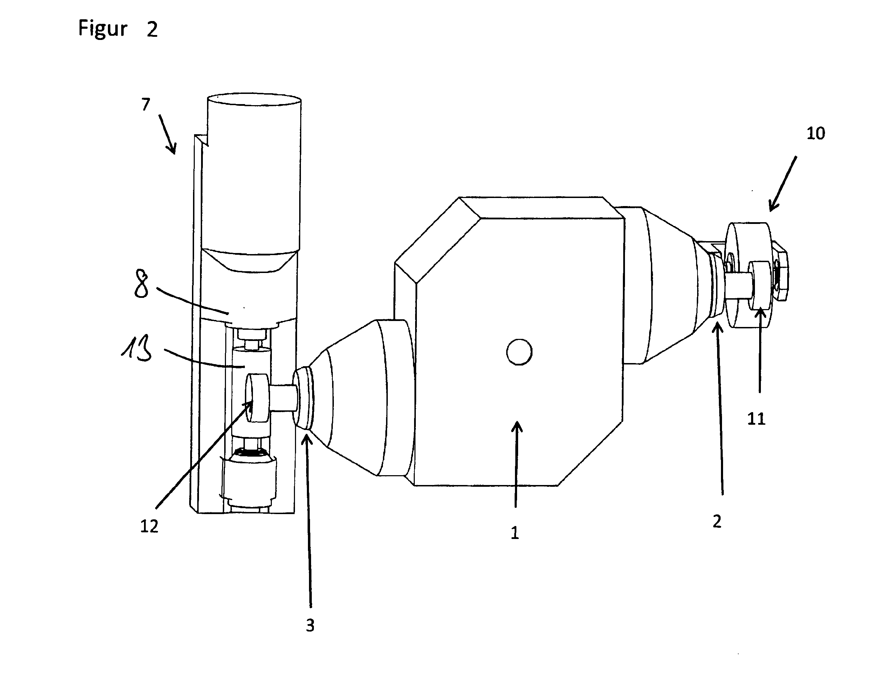

Die Hautptbearbeitungsstation ist an einem Maschinenblock 20 angeordnet, welcher über ein Linearantrieb 21 mit dem Maschinenbett in Verbindung steht und in X-Richtung an das Werkstück herangefahren werden kann, welches sich an der Werkstückspindel 3 befindet, die in der Bearbeitungsposition angeordnet ist. An dem Maschinenblock 20 ist ein Schlitten 22 über eine Schlittenanordnung 23 in Z-Richtung verfahrbar. An dem Schlitten 22 ist über eine Schwenkachse 25, welche ein Verschwenken um die A-Achse erlaubt, der Bearbeitungskopf 24 mit dem Antrieb 26 für die Werkzeugspindel zu sehen. Das in der Werkzeugspindel 8 aufgenommene Werkzeug 13 ist dabei nochmals in Figur 2 dargestellt. Dabei kann die Werkzeugspindel 8 nochmals am Bearbeitungskopf in V-Richtung linear vershiftet werden.

Die erfindungsgemäße Verzahnmaschine weist weiterhin eine Nebenstation 10 auf, an welcher eine Nebenbearbeitung und das Be- und Entladen der Werkstückspindeln erfolgt. Im Ausführungsbeispiel ist dabei als Nebenbearbeitungswerkzeug ein Anfas- und/oder Entgratwerkzeug 11 vorgesehen. Dieses kann durch nicht gezeigte Bewegungsachsen in einer Ebene, welche parallel zur Hauptschwenkachse 4 verläuft, an das Werkstück herangefahren werden.

Weiterhin ist ein in Figuren 1 und 2 nicht gezeigter Be- und Entlademechanismus vorgesehen, welcher Werkstücke, die beispielsweise über ein Transportband angeliefert werden, an der Werkstückspindel anordnet oder fertig bearbeitete Werkstücke von der Spindel entnimmt und bspw. wieder auf ein Transportband verbringt.

Durch Drehen des Spindelträgers 1 tauschen die Werkstückspindeln 2 und 3 ihre Positionen, so dass die Werkstückspindel, welche zuvor im Arbeitsbereich der Hauptbearbeitungsstation 7 war, nun im Arbeitsbereich der Nebenstation 10 angeordnet ist, und umgekehrt. Die Anordnung der Werkstückspindeln ist dabei punktsymmetrisch zur Hauptschwenkachse 4, so dass sich die beiden Werkstückspindeln, wenn sich der Spindelträger um 180° gedreht hat, jeweils in identischer Position befinden.

Durch den erfindungsgemäßen Aufbau ist die erfindungsgemäße Verzahnmaschine insbesondere aufgrund des weiten Auseinanderliegens der Bearbeitungsstellen deutlich handhabungsfreundlicher. Zum einen ist dabei der Arbeitsraum leichter zugänglich, da die Spindeln nicht dicht gedrängt nebeneinander liegen. Weiterhin beeinflussen sich die beiden Bearbeitungszentren nicht gegenteilig, da sie durch den dazwischen liegenden Spindelträger 1 voneinander getrennt sind. Hierdurch wird ohne weitere Maßnahmen verhindert, dass sich die beiden Bearbeitungsstellen gegenseitig beispielsweise durch Spanbildung verschmutzen.

Weiterhin erlaubt der erfindungsgemäße Aufbau ein Beladen der der Werkstückspindeln mit Werkstücken von einem Band, bei welchem die Werkstücke nur um eine Achse geschwenkt werden müssen. Insbesondere kann das Transportband dabei parallel zur Hauptschwenkachse 4 seitlich neben der Verzahnmaschine verlaufen.

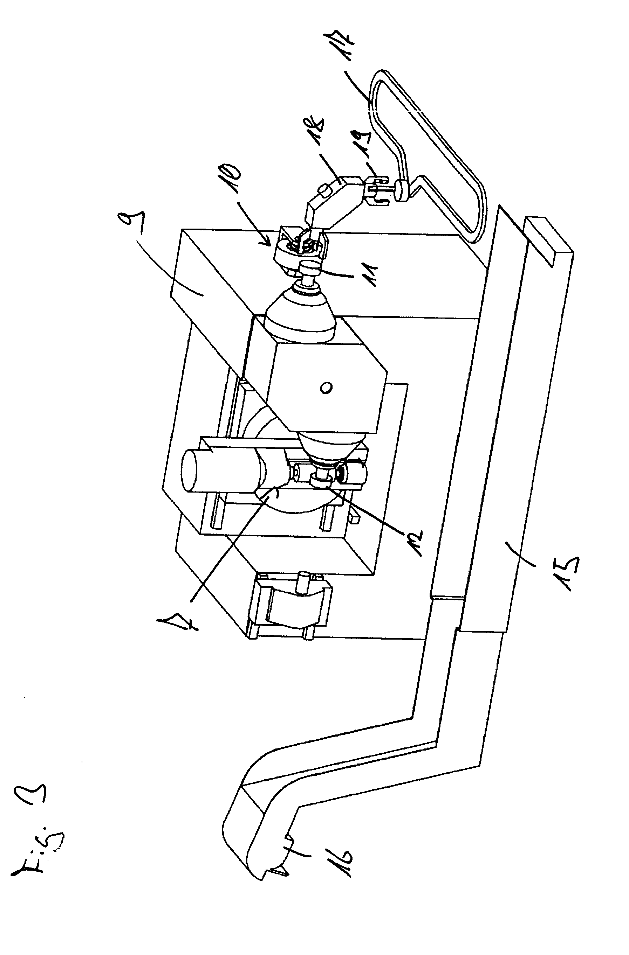

Eine Transportstrecke zum An- und Wegtransport der Werkstücke ist in Figuren 3 bis 5 schematisch dargestellt. Die Transportstrecke 17 transportiert dabei Werkstücke zu einer Handhabungsvorrichtung 18, welche die Werkstücke von der Transportstrecke aufnimmt und an derjenigen Werkstückspindel, welche sich gerade an der Nebenstation befindet, anordnet. Weiterhin wird die Handhabungsvorrichtung 18 dazu eingesetzt, fertig bearbeitete Werkstücke von der Spindel abzunehmen und auf die Transportstrecke zurückzugeben.

Die Haupttransportrichtung der Transportstrecke 17 verläuft im Ausführungsbeispiel parallel zur Hauptschwenkachse des Spindelträgers 1. Insbesondere ist die Transportstrecke dabei neben der Verzahnmaschine angeordnet, insbesondere parallel zu dem Maschinenblock 9. Die Handhabungsvorrichtung 18 weist im Ausführungsbeispiel eine Schwenkachse sowie zwei Greifer 19 auf. Durch Verschwenken der Handhabungsvorrichtung um ihre Drehachse kann so der eine Greifer von einer Greifposition, mit welcher die Werkstücke vom Transportband aufgenommen werden, zu einer Spindelposition, in welcher das Werkstück an der Werkstückspindel angeordnet werden kann, verschwenkt werden. Auch dieser einfache Aufbau der Transportvorrichtung wird durch die erfindungsgemäße Anordnung der Werkstückspindeln am Spindelträger ermöglicht.

Weiterhin erlaubt der erfindungsgemäße Aufbau ein gerades Maschinenbett, bei welchem Fräskopf und Spindelträger 1 nebeneinander angeordnet sind. Hierdurch werden hohe Steifigkeiten und eine hohe Thermostabilität erreicht.

Weiterhin kann, wie in Figuren 3 bis 5 gezeigt, ein Späneförderer 15 eingesetzt werden, welcher in einer Ebene senkrecht zur Hauptschwenkachse 1 unter der Hauptbearbeitungsstation vorbeiläuft.

Der Späneförderer dient damit gleichzeitig zum Abtransport der Späne, welche an der Nebenbearbeitungsstation anfallen, als auch der Späne, welche an der Hauptbearbeitungsstation anfallen. Die Späne werden dabei zu der erhöht angeordneten Öffnung 16 transportiert, von wo aus sie in einen dort platzierbaren Spänebehälter fallen. Auch bei dieser Anordnung des Späneförderers bewährt sich das erfindungsgemäße Maschinenkonzept.

Im Ausführungsbeispiel ist dabei die Hauptschwenkachse 4 horizontal angeordnet. Weiterhin sind die Werkstückspindeln so am Spindelträger angeordnet, dass sie in der Haupt- und der Nebenbearbeitungsposition jeweils horizontal verlaufen.

Dies hat neben der besseren Bedienbarkeit zusätzlich den Vorteil, dass Späne, welche beim Haupt- bzw. Nebenbearbeiten anfallen, einfach nach unten wegfallen.

Der erfindungsgemäße Aufbau erlaubt dabei beispielsweise ein Verzahnfräsverfahren, bei welchem zwischen dem Vorverzahnen und dem Hauptverzahnen, welche an der Hauptbearbeitungsstation 7 erfolgen, an der Nebenbearbeitungsstation 10 ein Entgraten und/oder Anfasen erfolgt. Die vorliegende Erfindung erlaubt damit einen Verfahrensablauf, wie er aus der DE 10 2006 044 738 bekannt ist.

Dabei findet an der Hauptbearbeitungsstation jeweils ein Wälzfräsen statt, während gleichzeitig an der Nebenstation entweder eine Entgrat- bzw. Anfasbearbeitung erfolgt, oder das Entladen eines fertigen Werkstücks und das Beladen mit einem noch nicht bearbeiteten Werkstück. Nach einem entsprechenden Bearbeitungsschritt tauschen die Werkstückspindeln ihre Positionen durch ein Schwenken des Spindelträgers 1 um 180°.

Dadurch ist folgender Verfahrensablauf möglich:
a) Werkstückspindel 2 steht in der Nebenposition und wird durch einen Lader mit einem Rohteil beladen.
b) Daraufhin wird der Spindelträger um 180° verschwenkt, so dass sich das neue Werkstück in der Hauptbearbeitungsposition befindet. Dadurch steht die zweite Werkstückspindel 3 in der Nebenposition.
c) Das an der Werkstückspindel 2 angeordnete Rohteil wird nun vorgefräst, während gleichzeitig ein weiteres Rohteil an der Werkstückspindel 3 angeordnet wird.
d) Ist das Vorfräsen beendet, schwenkt die Werkstückspindel 2 von der Hauptbearbeitungsposition in die Nebenposition. Die Werkstückspindel 3 gelangt hierdurch von der Nebenposition in die Hauptbearbeitungsposition.
e) Nun erfolgt an der Nebenposition ein Entgraten und/oder Anfasen des vorgefrästen Werkstücks, während an der Hauptbearbeitungsstation das Rohteil vorgefräst wird.
f) Der Spindelträger schwenkt die Werkstückspindel 2 wieder in die Hauptbearbeitungsposition und die Werkstückspindel 3 in die Nebenposition.
g) Das Werkstück an der Werkstückspindel 2 wird fertig gefräst, das Werkstück an der Werkstückspindel 3 wird angefast und/oder entgratet.
h) Der Spindelträger 1 schwenkt nun nochmals, so dass die Werkstückspindel 2 wieder in die Nebenposition gelangt, die Werkstückspindel 3 in die Hauptbearbeitungsposition.
i) Der Lader nimmt das fertige Werkstück von der Werkstückspindel 2 und bestückt diese mit einem neuen Rohteil. Gleichzeitig wird das Werkstück auf der Werkstückspindel 3 fertig gefräst.
j) Der Zyklus beginnt von vorne.

Der erfindungsgemäße Maschinenaufbau ermöglicht jedoch auch andere Bearbeitungsverfahren, bei welchen ein Hauptbearbeitungsverfahren an der Hauptbearbeitungsposition mit einem Zusatzmodul bzw. Zusatzbearbeitung an der Nebenposition kombiniert wird.

Weiterhin erlaubt der erfindungsgemäße Maschinenaufbau auch eine Kombination mehrerer Bearbeitungsverfahren in unterschiedlichen Modulen.

Mögliche Verfahren sind dabei neben dem Entgraten oder Chamfern auch ein Drehen, ein Bohren oder weitere Fräsarbeiten.

Weiterhin ist es möglich, während des an der Hauptbearbeitungsstation durchgeführten Hauptbearbeitungsschrittes an der Nebenstation sowohl ein Be- und Entladen, als auch einen Nebenprozess stattfinden zu lassen. Insbesondere ist dies von Vorteil, wenn der Nebenprozess eine deutlich kürzere Prozesszeit aufweist als der Hauptprozess.

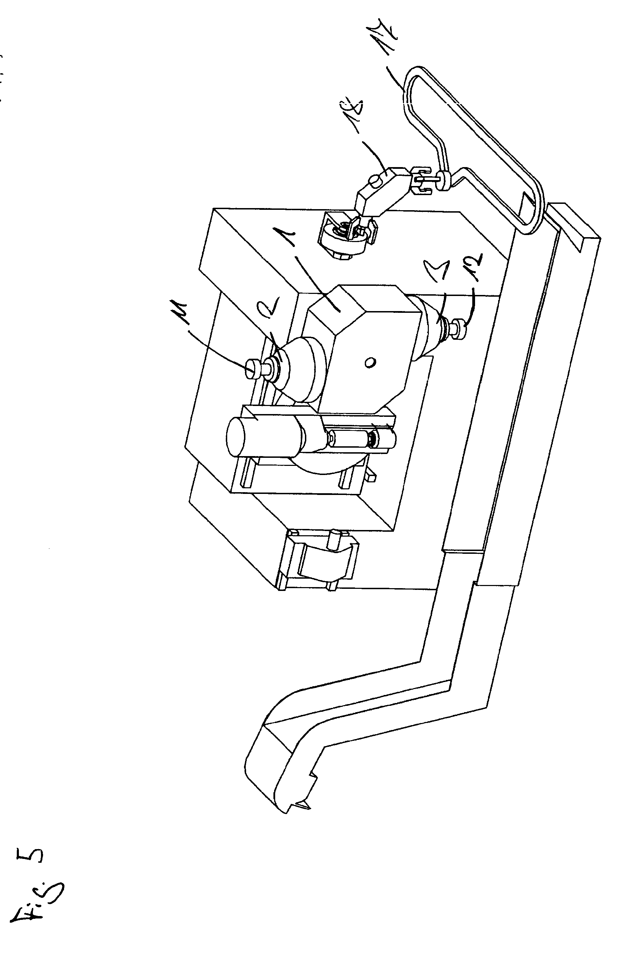

Alternativ zu dem soeben beschriebenen Verfahrensablauf ist es möglich, einzelne Bearbeitungs- oder Rüstschritte in einer zusätzlichen Spindelposition durchzuführen, wie sie in Figur 5 gezeigt ist. Hier ist der Spindelträger 1 mit den Werkstückspindeln 2 und 3 in einer Zwischenposition angeordnet, in welcher sich keine der beiden Spindeln 2 oder 3 in der Haupt- bzw. Nebenbearbeitungsposition befindet. Im Ausführungsbeispiel ist der Spindelträger hierfür um 90° gegenüber einer Bearbeitungsposition, in welcher sich die beiden Spindeln 2 oder 3 in der Haupt- bzw. Nebenbearbeitungsposition befinden, verschwenkt.

An der Zwischenposition kann ein Umrüsten einer Werkstückspindel erfolgen, insbesondere ein Wechsel einer Werkstückvorrichtung der Werkstückspindel. Hierdurch kann die Maschine zur Bearbeitung anderer Werkstücke umgerüstet werden. Durch die Zwischenposition wird das Umrüsten erheblich vereinfacht, da diese mehr Platz und eine bessere Zugänglichkeit ermöglicht. Vorteilhafterweise können dabei die beiden Werkstückspindeln 2 und 3 nacheinander an der gleichen Position umgerüstet werden, indem der Spindelträgers in zwei (um 180° versetzte) Zwischenpositionen verschwenkt wird, in welchen sich jeweils eine der beiden Werkstückspindeln in einer Rüstposition befindet. Das Umrüsten kann dabei alternativ an der unten oder an der oben angeordneten Werkstückspindel vorgenommen werden.

Vorteilhafterweise weist die Steuerung der Verzahnmaschine dabei eine Funktion auf, durch deren Aktivieren der Spindelträger in eine erste und vorteilhafterweise in eine zweite Zwischenposition gefahren werden kann, in welcher sich die erste bzw. zweite Werkstückspindel in einer Rüstposition befinden.

An der in Fig. 5 gezeigten Zwischenposition kann aber auch ein zusätzlicher Bearbeitungsschritt durchgeführt werden. Beispielsweise könnte eine Vorvermessung, ein Einrichtprozess, ein Abwasch- oder ein Kontrollmessprozess durchgeführt werden.

Alternativ könnte an dieser Zwischenposition ein Be- und/oder Entladen der Werkstückspindeln erfolgen. Hierzu müsste die Transportstrecke 17 entsprechend in ihrer Position so verändert werden, dass sie die Werkstücke zu der Werkstückspindel in der Zwischenposition befördert. Weiterhin müsste auch eine entsprechende Handhabungseinrichtung vorgesehen werden.

Im Ausführungsbeispiel befindet sich die Zwischenposition dabei um 90° versetzt zwischen der Haupt- bzw. Nebenbearbeitungsposition. Im Ausführungsbeispiel verläuft die Drehachsen der Werkstückspindel, welche sich in der Zwischenposition befindet, senkrecht. Dies hat den Vorteil, dass bei einem Be- und Entladen in dieser Position die Werkstücke nicht mehr gedreht oder verschwenkt werden müssen. Die Transportstrecke 17 müsste dabei beispielsweise über der Verzahnmaschine verlaufen, oder unter dem Spindelträger.

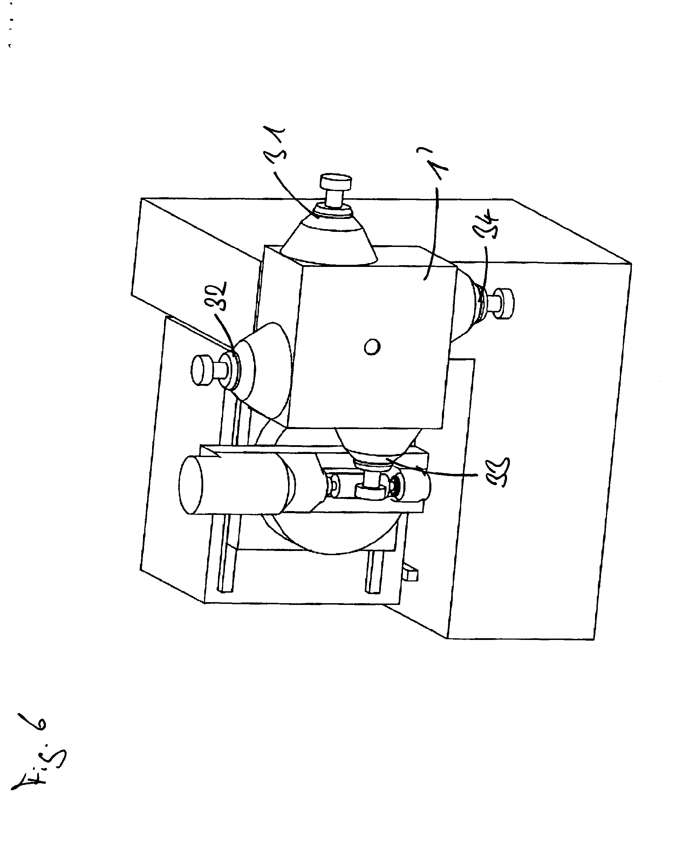

In Figur 6 ist ein weiteres Ausführungsbeispiel der vorliegenden Erfindung gezeigt, bei welchem vier Werkstückspindeln 31 bis 34 an dem Spindelträger 1' angeordnet sind. Die Anordnung der Werkstückspindeln erfolgt dabei in gleicher Weise wie schon beim ersten Ausführungsbeispiel, wobei die vier Werkstückspindeln jeweils um 90° versetzt zueinander am Spindelträger 1' angeordnet sind.

Hierdurch ist es möglich, entweder das Be- und Entladen sowie die Nebenbearbeitung an unterschiedlichen Nebenstationen durchzuführen, und/oder an einer zusätzlichen Nebenstation einen weiteren Arbeitsschritt durchzuführen. Hierbei werden zusätzliche Operationen wie eine Vorvermessung, Einrichtprozesse, Abwasch-und/oder Kontrollmessprozesse möglich.

Insbesondere könnte dabei zu der Nebenstation, wie sie im ersten Ausführungsbeispiel gezeigt ist, eine weitere Nebenstation hinzukommen, an welche die Werkstücke durch Drehen aus der Hauptbearbeitungsposition beispielsweise um 90° in die eine oder die andere Richtung verfahren werden können.

Die vorliegende Erfindung ermöglicht es damit mit den in Figuren 5 und 6 gezeigten Varianten, nicht nur in einer 180° zur Hauptbearbeitungsposition angeordneten Position zu bestücken bzw. nebenzubearbeiten, sondern auch in einer um 90° versetzten Rüst- bzw. Nebenposition. Weiterhin sind zusätzliche Prozessschritte möglich.

Dabei ist eine solche Ergänzung der Verzahnmaschine ohne Verlust an Stabilität und leichter Bedienbarkeit möglich.

## Patentansprüche

1. Verzahnmaschine, insbesondere Verzahnfräs- oder Verzahnstoßmaschine, mit mindestens zwei an einem Spindelträger angeordneten Werkstückspindeln zur Aufnahme von Werkstücken, wobei der Spindelträger um eine Hauptschwenkachse verschenkbar ist und die Werkstückspindeln jeweils einen Antrieb zum Drehen der Werkstücke um eine Drehachse aufweisen,
und mit einer Hauptbearbeitungsstation zum Bearbeiten von in den Werkstückspindeln aufgenommenen Werkstücken,
wobei die beiden Werkstückspindeln durch Verschenken des Spindelträgers um die Hauptschwenkachse abwechselnd in den Arbeitsbereich der Hauptbearbeitungsstation verfahrbar sind,
**dadurch gekennzeichnet,**
**dass** die Drehachsen der beiden Werkstückspindeln jeweils in einem Winkel α # 0 zur Hauptschwenkachse am Spindelträger angeordnet sind.

2. Verzahnmaschine nach Anspruch 1, wobei die Drehachsen der beiden Werkstückspindeln den gleichen Winkel zur Hauptschwenkachse aufweisen und/oder wobei die beiden Werkstückspindeln den gleichen Abstand zur Hauptschwenkachse aufweisen, wobei die beiden Werkstückspindeln besonders vorteilhafterweise durch ein entsprechendes Verschwenken des Spindelträgers abwechselnd in eine identische Position relativ zur Hauptbearbeitungsstation verfahrbar sind.

3. Verzahnmaschine nach Anspruch 1 oder 2, wobei die Drehachsen der beiden Werkstückspindeln jeweils in einen Winkel α > 30° zur Hauptschwenkachse am Spindelträger angeordnet sind, vorteilhafterweise in einen Winkel α > 60°, wobei die die Drehachsen der beiden Werkstückspindeln besonders vorteilhafterweise in einer Ebene angeordnet sind, welche senkrecht auf der Hauptschwenkachse steht, und/oder wobei die Drehachsen der beiden Werkstückspindeln parallel zueinander angeordnet sind und vorteilhafterweise einen gewissen Abstand zueinander aufweisen.

4. Verzahnmaschine nach einem der vorangegangenen Ansprüche, mit mindestens einer Nebenstation zum Be- und Entladen der Werkstückspindeln und/oder zum Nebenbearbeiten der in den Werkstückspindeln aufgenommenen Werkstücke, wobei vorteilhafterweise an der Nebenstation ein Anfasen und/oder Entgraten erfolgen kann, insbesondere ein Anfasfräsentgraten oder ein ChamferCut-Prozess oder ein Drückentgrat-Prozess.

5. Verzahnmaschine nach einem der vorangegangenen Ansprüche, mit einer Steuerung, welche eine Funktion aufweist, durch deren Aktivieren der Spindelträger in eine erste und vorteilhafterweise in eine zweite Zwischenposition gefahren werden kann, in welcher sich zumindest eine der Werkstückspindeln nicht in einer Haupt- oder Nebenbearbeitungsposition befindet, wobei in der oder den Zwischenpositionen vorteilhafterweise ein Umrüsten der Werkstückspindel erfolgen kann.

6. Verzahnmaschine nach einem der vorangegangenen Ansprüche, wobei die Hauptbearbeitungsstation einen Bearbeitungskopf aufweist, welcher über eine Linearachse X auf das Werkstück zugestellt werden kann, welche einen Winkel β ≠ 90° zur Hauptschwenkachse aufweist, und/oder über eine Linearachse Z entlang der Zahnbreite des Werkstücks verfahrbar ist, welche einen Winkel γ ≠ 0 zur Hauptschwenkachse aufweist, und/oder über eine Schwenkachse A relativ zum Werkstück verschwenkt werden kann, welche einen Winkel von ϕ ≠ 90° zur Hauptschwenkachse aufweist, und/oder wobei ein Bearbeitungswerkzeug der Nebenstation in einer Ebene an das Werkstück heranfahrbar ist, welche einen Winkel von ξ # 90° zur Hauptschwenkachse aufweist.

7. Verzahnmaschine nach einem der vorangegangenen Ansprüche, mit einem Gegenhalter, wobei der Gegenhalter vorteilhafterweise über eine Linearachse an einem stationären Maschinenelement angeordnet ist und mit einer Werkstückspindel zusammenwirkt, wenn diese sich in der Hauptbearbeitungsposition befindet.

8. Verzahnmaschine nach einem der vorangegangenen Ansprüche, wobei die beiden Werkstückspindeln so am Spindelträger angeordnet sind, dass sich in einer ersten Verschwenkstellung des Spindelträgers eine erste Werkstückspindel im Arbeitsbereich der Hauptbearbeitungsstation und eine zweite Werkstückspindel im Arbeitsbereich der Nebenstation befindet, wobei vorteilhafterweise durch ein Verschwenken des Spindelträgers in einer zweite Verschwenkstellung die erste Werkstückspindel in den Arbeitsbereich der Nebenstation und/oder die zweite Werkstückspindel in den Arbeitsbereich der Hauptbearbeitungsstation verfahrbar ist.

9. Verzahnmaschine nach einem der vorangegangenen Ansprüche, wobei die Hauptschwenkachse horizontal oder vertikal angeordnet ist, und/oder wobei sich die Hauptbearbeitungsstation und die Nebenstation bezüglich der Hauptschwenkachse auf gegenüberliegenden Seiten des Spindelträgers befinden, und/oder wobei die Drehachse der Werkstückspindel, welche sich im Arbeitsbereich der Hauptbearbeitungsstation befindet, horizontal ausgerichtet ist.

10. Verzahnmaschine nach einem der vorangegangenen Ansprüche, mit einem gemeinsamen Späneförderer für die Hauptbearbeitungsstation und die Nebenbearbeitungsstation, welcher sich vorteilhafterweise horizontal unter der Hauptbearbeitungsstation und der Nebenbearbeitungsstation erstreckt, und/oder wobei die Transportrichtung des Späneförderers in einer Ebene liegt, welche senkrecht auf der Hauptschwenkachse des Spindelträgers steht.

11. Verzahnmaschine nach einem der vorangegangenen Ansprüche, mit insgesamt mindestens drei und vorteilhafterweise vier an dem Spindelträger angeordneten Werkstückspindeln zur Aufnahme von Werkstücken, wobei die Werkstückspindeln jeweils einen Antrieb zum Drehen der Werkstücke um eine Drehachse aufweisen, wobei vorteilhafterweise bei vier Werkstückspindeln diese jeweils um 90° versetzt am Spindelträger angeordnet sind, und/oder Verzahnmaschine mit einer Steuerung, welche den Spindelträger zwischen zwei Bearbeitungsschritten um weniger als 180° zu einer neuen SpindelPosition verschwenkt, insbesondere um 90°.

12. Verzahnmaschine nach einem der vorangegangenen Ansprüche, mit mindestens einer zweiten Nebenstation zum Be- und Entladen der Werkstückspindeln und/oder zum Nebenbearbeiten der in den Werkstückspindeln aufgenommenen Werkstücke, wobei die Nebenstation vorteilhafterweise als Vermessstation und/oder als Einrichtungsstation und/oder als Reinigungsstation und/oder als Kontrollstation ausgeführt ist, wobei vorteilhafterweise die mindestens zwei Werkstückspindeln so am Spindelträger angeordnet sind, dass sich in einer dritten Verschwenkstellung des Spindelträgers eine erste Werkstückspindel im Arbeitsbereich der zweiten Nebenstation befindet, wobei vorteilhafterweise vier Werkstückspindeln vorgesehen sind und sich in der dritten Verschwenkstellung des Spindelträgers eine zweite Werkstückspindel in dem Arbeitsbereich der ersten Nebenstation und eine dritte Werkstückspindel in dem Arbeitsbereich der Hauptbearbeitungsstation befindet.

13. Verzahnmaschine nach einem der vorangegangenen Ansprüche, mit einer Transportstrecke zum Zu- und/oder Abtransport der Werkstücke zur Be-und/oder Entladungsstation, und mit einer Handhabungsvorrichtung, welche die Werkstücke von der Transportstrecke abnimmt und an einer Werkstückspindel anordnet, wobei die Haupt-Transportrichtung der Transportstrecke vorteilhafterweise parallel zur Haupt-Schwenkachse des Spindelträgers verläuft und/oder wobei die Handhabungsvorrichtung die Werkstücke um 90° dreht und/oder wobei die Drehachse der Werkstückspindel, welche sich im Arbeitsbereich der Be- und/oder Entladungsstation befindet, horizontal ausgerichtet ist.

14. Verzahnmaschine nach einem der vorangegangenen Ansprüche, mit einer Steuerung, welche die Verzahnmaschine so ansteuert, dass gemäß einer ersten Steuerroutine
eine Werkstückspindel an einer Nebenstation mit einem Werkstück beladen und ggf. bearbeitet wird,
die Werkstückspindel mit dem Werkstück durch Verschwenken des Spindelträgers in den Arbeitsbereich der Hauptbearbeitungsstation verfahren wird, das Werkstück an der Hauptbearbeitungsstation bearbeitet, insbesondere verzahnt wird,
die Werkstückspindel mit Werkstück durch Verschwenken des Spindelträgers in den Arbeitsbereich einer Nebenstation verfahren wird,
das Werkstück an der Nebenstation ggf. bearbeitet und entladen wird,
wobei vorteilhafterweise zwei Werkstücke jeweils gleichzeitig auf der Maschine bearbeitet werden und die oben genannten Schritte nacheinander durchlaufen,
und/oder wobei
gemäß einer zweiten Steuerroutine
eine Werkstückspindel an einer Nebenstation mit einem Werkstück beladen wird,
die Werkstückspindel mit dem Werkstück durch Verschwenken des Spindelträgers in den Arbeitsbereich der Hauptbearbeitungsstation verfahren wird, das Werkstück an der Hauptbearbeitungsstation bearbeitet, insbesondere vorverzahnt wird,
die Werkstückspindel mit Werkstück durch Verschwenken des Spindelträgers in den Arbeitsbereich einer Nebenstation verfahren wird,
das Werkstück an der Nebenstation bearbeitet, insbesondere angefast und/oder entgratet wird,
die Werkstückspindel mit Werkstück durch Verschwenken des Spindelträgers in den Arbeitsbereich der Hauptbearbeitungsstation verfahren wird,
das Werkstück an der Hauptbearbeitungsstation bearbeitet, insbesondere feinverzahnt wird,
die Werkstückspindel mit dem Werkstück durch Verschwenken des Spindelträgers in den Arbeitsbereich einer Nebenstation verfahren wird, und
das Werkstück an der Nebenstation entladen wird,
wobei das vor- und feinverzahnen vorteilhafterweise durch Verzahnfräsen oder Verzahnstoßen erfolgt, und/oder
wobei vorteilhafterweise zwei Werkstücke jeweils gleichzeitig auf der Maschine bearbeitet werden und die oben genannten Schritte nacheinander durchlaufen.

15. Verfahren zur Herstellung eines verzahnten Werkstückes, insbesondere eines Zahnrads, auf einer Verzahnmaschine nach einem der vorangegangenen Ansprüche, bei welchem
gemäß einer ersten Steuerroutine
eine Werkstückspindel an einer Nebenstation mit einem Werkstück beladen und ggf. bearbeitet wird,
die Werkstückspindel mit dem Werkstück durch Verschwenken des Spindelträgers in den Arbeitsbereich der Hauptbearbeitungsstation verfahren wird, das Werkstück an der Hauptbearbeitungsstation bearbeitet, insbesondere verzahnt wird,
die Werkstückspindel mit Werkstück durch Verschwenken des Spindelträgers in den Arbeitsbereich einer Nebenstation verfahren wird,
das Werkstück an der Nebenstation ggf. bearbeitet und entladen wird,
wobei vorteilhafterweise zwei Werkstücke jeweils gleichzeitig auf der Maschine bearbeitet werden und die oben genannten Schritte nacheinander durchlaufen,
und/oder wobei
gemäß einer zweiten Steuerroutine
eine Werkstückspindel an einer Nebenstation mit einem Werkstück beladen wird,
die Werkstückspindel mit dem Werkstück durch Verschwenken des Spindelträgers in den Arbeitsbereich der Hauptbearbeitungsstation verfahren wird, das Werkstück an der Hauptbearbeitungsstation bearbeitet, insbesondere vorverzahnt wird,
die Werkstückspindel mit Werkstück durch Verschwenken des Spindelträgers in den Arbeitsbereich einer Nebenstation verfahren wird,
das Werkstück an der Nebenstation bearbeitet, insbesondere angefast und/oder entgratet wird,
die Werkstückspindel mit Werkstück durch Verschwenken des Spindelträgers in den Arbeitsbereich der Hauptbearbeitungsstation verfahren wird,
das Werkstück an der Hauptbearbeitungsstation bearbeitet, insbesondere feinverzahnt wird,
die Werkstückspindel mit dem Werkstück durch Verschwenken des Spindelträgers in den Arbeitsbereich einer Nebenstation verfahren wird, und
das Werkstück an der Nebenstation entladen wird,
wobei das vor- und feinverzahnen vorteilhafterweise durch Verzahnfräsen oder Verzahnstoßen erfolgt, und/oder
wobei vorteilhafterweise zwei Werkstücke jeweils gleichzeitig auf der Maschine bearbeitet werden und die oben genannten Schritte nacheinander durchlaufen,
wobei vorteilhafterweise der Spindelträger in eine erste und weiterhin vorteilhafterweise in eine zweite Zwischenposition gefahren wird, in welcher sich zumindest eine der Werkstückspindeln nicht in einer Haupt- oder Nebenbearbeitungsposition befindet, wobei in der oder den Zwischenpositionen vorteilhafterweise ein Umrüsten der Werkstückspindel erfolgt.
